# EUROPEAN PATENT APPLICATION

(11) **EP 3 708 884 A1**
(43) Date of publication of application: **16.09.2020**
(21) Application number: 19162267.9
(22) Date of filing: 12.03.2019
(51) Int. Cl.: F16K 1/52, F16K 3/32, G05D 7/01

(54) **A VALVE WITH AN AMOUNT CONTROL ARRANGEMENT WITH MANUAL PRE-SETTING**

(71) Applicant: FRESE A/S, 4200 Slagelse (DK)
(72) Inventor: Rasmussen, Christian Bo, 5230 Odense M (DK)
(74) Representative: AWA Denmark A/S

(57) **Abstract**

A valve comprises a valve housing (2); a valve inlet (3); a valve outlet (4); an amount control arrangement (16) for dynamic control of the amount of liquid flowing through the valve; and a differential pressure maintaining arrangement (13) for maintaining a substantially constant differential pressure across the amount control arrangement (16). The amount control arrangement (16) is adapted for dynamic adjustment of the flow amount through the valve between a maximum setting and a minimum, and the maximum setting can be manually pre-set independently from the dynamic adjustment of the flow amount. The valve further comprises a connector (8a, 10) at a location on the valve housing (2), for connection with an actuator for automatic control of the dynamic adjustment of the flow amount, and a manual access point (14), at a different location on the valve housing (2), for the manual pre-setting of the flow amount range.

## Description

The invention relates to a valve comprising a valve housing with an axis defining an axial direction through the housing; a valve inlet; and a valve outlet, the valve further comprising: an amount control arrangement for dynamic control of the amount of liquid flowing through the valve; and a differential pressure maintaining arrangement for maintaining a substantially constant differential pressure across the amount control arrangement, wherein the amount control arrangement is adapted for dynamic adjustment of the flow amount through the valve in a step-less manner between a maximum setting and a minimum of a flow amount range, wherein the maximum setting of the flow amount range can be manually pre-set independently from the dynamic adjustment of the flow amount.

Valves of this kind are known e.g. from WO 2006/136158 A1 and WO 2009/135490 A2, both of the present applicant. These valves are used for many different purposes, e.g. regulating of heating, such as floor heating, heating in large buildings, cooling, etc.

Thus, WO 2009/135490 A1 describes a control valve, which is used for controlling heat emission from a heat emitter, such as a radiator, a convector or a fan-coil positioned in a room of a building (note that in the context of this specification both heating and cooling is denoted "heating", cooling being considered "negative heating"). The control valve is positioned decentralized on the conduit leading to or from the heat emitter and is positioned near the heat emitter, typically right before or after, and typically within the room to be heated. The valve comprises a housing with a valve insert, which has an amount control arrangement for variable control of the amount of liquid flowing through the valve and a differential pressure maintaining arrangement, often denoted a differential pressure governor or a differential pressure regulator, for maintaining a constant differential pressure across the amount control arrangement. The differential pressure maintaining arrangement comprises a rolling diaphragm and a cup-shaped valve member movable together along an axis of the valve, the valve member and diaphragm setting themselves in a balance between an upstream pressure on the one hand and a downstream pressure as well as a spring force on the other hand. The amount control arrangement is adapted so that the flow amount through the valve can be dynamically adjusted within an independently pre-set flow amount range. An inner, cylindrical valve member is co-axial with a rotatable outer, cylindrical valve member, both valve members having a circumferentially extending cut-out, the pre-setting of the flow amount range being established by manual rotation of one valve member in relation to the other to provide a varying overlap of the cut-outs and thus a varying pre-set opening area. The valve members are furthermore movable together in the axial direction to vary the pre-set opening area provided by the circumferential overlap of the cut-outs, the valve members being connectable with an actuator to provide the dynamic flow amount adjustment by automatically controlling the common axial position of the valve members.

WO 2006/136158 A1 discloses another valve having a flow amount adjustment arrangement with dynamic flow amount regulation within a pre-set flow amount range and differential pressure regulation across the flow amount adjustment arrangement.

Common for the valves disclosed in WO 2006/136158 A1 and WO 2009/135490 A2 is that the connector, for connection with an actuator, and the manual setting point are positioned adjacent each other, and accordingly the manual setting of the flow amount range, or of the maximum setting of the flow amount range, may only be performed when an actuator is not connected with the connector, since the actuator would otherwise block any access to the manual setting point. Under certain circumstances this may pose a problem or an inconvenience.

It is an object of the present invention to provide a valve that avoids the above problem of the prior art.

The object is obtained according to the present invention by a valve as mentioned by way of introduction, wherein the valve further comprises a connector as a first access point, at a location on the valve housing, for connection with an actuator for automatic control of the dynamic adjustment of the flow amount, and a manual access point, at a different location on the valve housing, for the manual pre-setting of the flow amount range. The connector may be embodied in any suitable way to be connected with an actuator in any way known to the skilled person. The manual access point may be a handle or a knob to be grabbed by the hand or fingers of an operator; a non-circular knob, such as a polygon, especially a hexagon to be grabbed by means of a hand-tool in the form of a wrench, etc. or a shaft-end with a slot or notch for engagement with a screwdriver or an Allen key, etc. By providing the connector at a different location on the valve housing than the manual access point, it is possible to access the manual access point even if an actuator is connected with the connector.

In a practical embodiment, a valve insert is extending through the valve housing along the axis, said valve insert comprising the first access point and the manual access point, and the locations of the first access point and the different location of the manual access point are positioned on mutually opposite sides of the valve housing. Providing a valve insert extending through the housing to allow positioning the first access point and the manual access point on either side of the housing, on one hand facilitates production and on another hand locates the first access point and the manual access point far apart to ensure that the manual access point is accessible in spite of an actuator being connected with the connector.

In a further practical embodiment, the amount control arrangement comprises two valve members movable together with a first degree of freedom relative to the axis for said dynamic adjustment and movable relative to each other with a second, different degree of freedom relative to the axis for said manual pre-setting of the maximum setting of the flow amount range. By arranging two valve members to movable with two different degrees of freedom relative to the axis, i.e. to be movable by respectively rotation around the axis and translation along the axis, construction of the valve is facilitated. Said two different degrees of freedom may be the only freedoms of substantial movement available for the two valve members.

In a practical embodiment the two valve members of the amount control arrangement comprise an inner, hollow, substantially circular cylindrical valve member co-axial with an outer, hollow, substantially circular cylindrical valve member.

In yet a further embodiment, one valve member of the two valve members is connected, rigidly relative to said first degree of freedom, with a first shaft extending to the location of the first access point, and another valve member of the two valve members is connected, rigidly relative to said second degree of freedom, with a second shaft extending to the location of the manual access point. This further facilitates construction of the valve.

In still a further embodiment one valve member of the two valve members is connected, rigidly relative to said first degree of freedom, with a first shaft extending to the location of the first access point, and another valve member of the two valve members is connected, rigidly relative to said second degree of freedom, with a second shaft extending to the location of the manual access point, the first shaft being connected to one of the two valve members for moving axially at least said one of the two valve members, the second shaft being connected to the other of the two valve members for rotating said other of the two valve members by rotation of the second shaft, the second shaft being axially moveable relative to said one of the two valve members. This further facilitates the construction of the valve.

In a practical embodiment the two valve members are axially movable in unison by means of the first shaft, and the second shaft is axially movable relative to the other of the two valve members also.

I another practical embodiment the first shaft is connected to the outer, hollow, substantially circular cylindrical valve member for moving axially at least said outer valve member, and the second shaft is connected to the inner, hollow, substantially circular cylindrical valve member for rotating said inner valve member.

In an embodiment the two valve members of the amount control arrangement comprise an inner, hollow, substantially circular cylindrical valve member co-axial with an outer, hollow, substantially circular cylindrical valve member, both valve members having a circumferentially extending cut-out, the pre-setting of the maximum setting of the flow amount range being established by manual rotation of one valve member in relation to the other valve member to provide a varying overlap of the cut-outs and thus a varying pre-set opening area, a piston acting against a seat being movable together with the valve members in the axial direction to vary the pre-set opening area provided by the circumferential overlap of the cut-outs, and thus to provide the variable control of the amount of liquid flowing through the valve, the piston being connectable with the actuator for automatic control of the axial position of the piston. Providing circumferential extending cut-outs in co-axial circular cylindrical valve members that are rotatable relative to each other provides a convenient way of providing for adjustment of an overall size of a passage through the circular cylindrical members thereby providing for adjustment of a maximum setting of a flow amount range.

In an embodiment the differential pressure maintaining arrangement comprises a third valve member, the third valve member being movable in the axial direction of the valve in relation to a second seat in the valve housing and being adapted to set itself in a balance between an upstream pressure on an upper side equal to a pressure at an inlet to the amount control arrangement and a downstream pressure on a lower side equal to a pressure at an outlet from the amount control arrangement as well as a spring force.

In a further embodiment the valve comprises a rolling diaphragm with an outer and an inner rim, the inner rim being attached to the third valve member, and the outer rim being attached so as to be stationary in relation to the valve housing. The rolling diaphragm provides, in a manner known per se, for a valve that is tightened between yet easily movable parts.

In a further, practical embodiment the third valve member is cup-shaped, a circumferential lower edge of the third valve member cooperating with the second valve seat.

In yet a practical embodiment the first valve seat and the second valve seat are positioned co-axially in the valve housing substantially in a common, radial plane. This facilitates a compact construction of the valve.

In the following the invention will be explained in further detail by way of a non-limiting example of an embodiment having reference to the schematic drawing, in which
Fig. 1 shows a section through a valve according to the present invention, and
Figs. 2 to 5 illustrates an embodiment of the amount control arrangement.

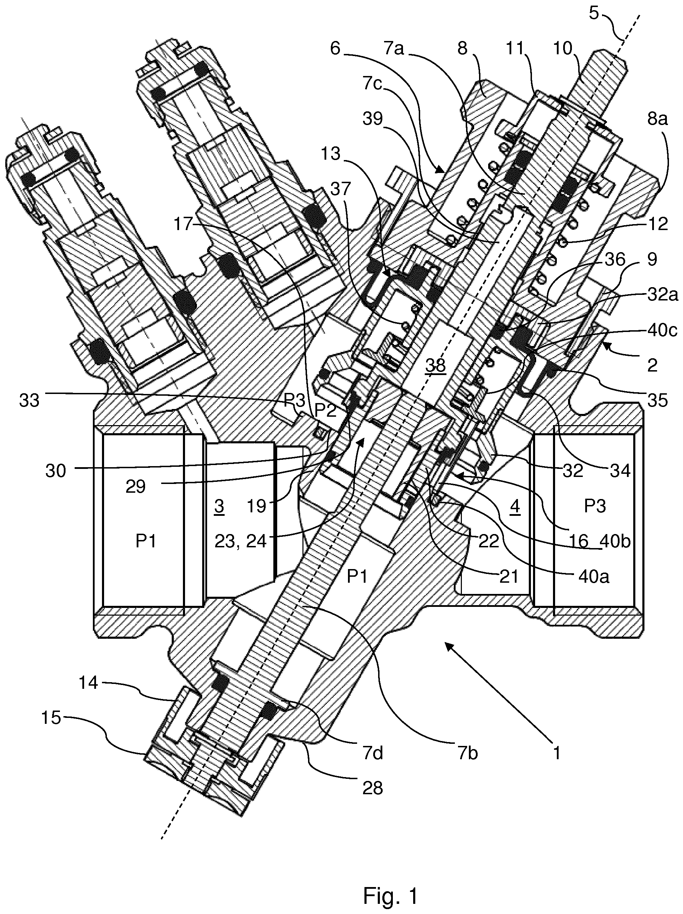

Fig. 1 shows a valve 1 according to the present invention comprising a valve housing 2 with a valve inlet 3 and a valve outlet 4 and with an axis 5 extending through the housing 2. The axis 5 defines an axial direction.

A valve insert 6 is extending through the valve housing 2 along the axis 5. The valve insert 6 comprises a two-part spindle extending co-axially with the axis 5 through the housing, said two-part spindle comprising a first shaft 7a extending to an upper end of the valve housing 2, and a second shaft 7b extending to a lower end of the housing 2.

It should be understood that herein expressions "up" and "down", and correspondingly "upper" and "lower", "upwards" and "downwards", etc., refer to the valve in the position shown in Fig. 1, and that in a practical use situation the valve 1 may be in another position e.g. turned upside down relative to position shown in Fig. 1.

The first shaft 7a is mounted in the valve housing 2 by means of an upper bushing element 8 that is fixed to the valve housing 2 by means of hollow screw element 9 provided with an external thread engaging with an internal thread in the valve housing 2. The first shaft 7a is extending through the upper bushing element 8 to be axially displaceable between axial stops. The first shaft 7a, adjacent an upper end 10 thereof, is provided with an inverted cup-shaped element 11, which is at least axially fixed on the first shaft 7a e.g. by means of a retaining washer. A hollow protrusion inside the upper bushing member 8 provides a guide for the first shaft 7a and a helical spring 12 urging the inverted cup-shaped element 11 and thus the first shaft 7a upwards relative to the upper bushing member 8. The first shaft 7a comprises a portion 7c having a non-circular cross section, e.g. a polygonal cross section, extending through a part of the upper bushing member 8 also having a non-circular cross section, e.g. a similar polygonal cross section, whereby the first shaft 7a is substantially prevented from rotating relative to the upper bushing member 8 and the valve housing 2. Thus the first shaft substantially has only one degree of freedom for movement, i.e. in the axial direction.

Below the upper bushing element 8, the first shaft 7a carries a differential pressure maintaining arrangement 13 to be explained below.

The second shaft 7b extends through a circular hole in the lower end of the valve housing 2 for the second shaft 7b to be rotatable around the axis 5. In the present embodiment, a flange 7d on the second shaft 7b inside the valve housing 2 at the lower end thereof provides an axial stop for downwards movement of the second shaft 7b. At the lower end the second shaft 7b is carrying a handle or knob 14 provided as a bushing with a non-circular, e.g. polygonal hole, through which a part of the second shaft 7b with a likewise non-circular cross section is extending for the handle 14 to be axially movable but non-rotatable relative to the second shaft 7b. A threaded bushing or nut 15 attached to a likewise threaded part of the second shaft 7b provides for optional squeezing the handle 14 between the nut 15 and the external surface of the valve housing 2, by tightening the nut 15, thereby preventing the handle 14 and accordingly the second shaft 7b from rotating due to friction between the handle 14 and the external surface of the valve housing 2. The handle 14 provides a manual access point for the manual pre-setting of the flow amount range, as it will be explained below.

In an intermediate area at a lower end of the first shaft 7a and an upper end of the lower shaft 7b, an amount control arrangement 16 is provided. The amount control arrangement 16 is for dynamic control of the amount of liquid flowing through the valve and will be explained in detail below.

In the following the amount control arrangement 16 for dynamic control of the amount of liquid flowing in through the valve inlet 3 and out through the valve outlet 4 will be explained having reference to Fig. 1 and Figs. 2 to 5. The amount control arrangement allows for the flow amount range to be manually and independently pre-set. Within this pre-set range, flow amount through the valve 1 is dynamically and automatically controlled in a step-less manner to several positions between a maximum setting and a minimum setting.

The amount control arrangement 16 comprises an inner, hollow, substantially cylindrical valve member 21, which is co-axial with an outer, hollow, substantially cylindrical valve member 22. Each valve member 21, 22 forms a cylinder shell and has a circumferentially extending cut-out 23, 24 that extends approximately 175 degrees in the circumferential direction. This angle may be smaller than 175 degrees and should not exceed 180 degrees.

The pre-setting of the flow amount range can be established by manual rotation of the inner valve member 21 in relation to the outer valve member 22 to provide a varying overlap of the cut-outs 23, 24 and thus varying a pre-set opening area. The inner valve member 21 is rotationally fixed to the handle or knob 14 via the second shaft 7b which extends coaxially inside the valve housing 2. Thus the upper end of the second shaft 7b has a non-circular cross section and is extending with a clearance through an opening in an upper, central part of the inner valve member 21, said opening likewise having a non-circular cross section. Thus the inner valve member 21 is able to move axially relative to the second shaft 7b, but is substantially prevented from rotating relative to the second shaft 7b. Further liquid may pass through the clearance between the second shaft 7b and the inner valve member 21.

The handle 14 can be rotated by hand to adjust the pre-setting. The handle 14 and thus the pre-setting can be locked by rotational tightening of the threaded bushing or nut 15 cooperating with the external thread of the second shaft 7b. Indicia at a part 28 of the external surface of the valve housing 2 indicate the size of the pre-set flow amount range, i.e. the maximum flow amount.

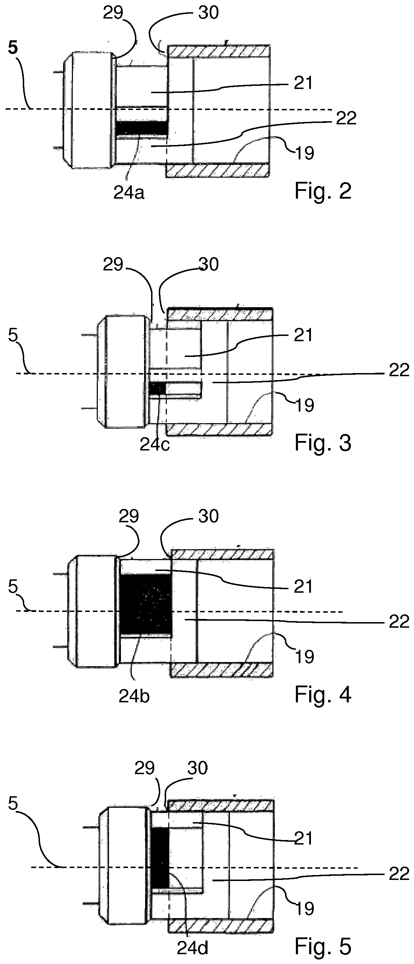

As illustrated e.g. in Fig. 2 a rotational position of the inner valve member 21 relative to the outer valve member 22 provides a small overlapping area 24a (marked as black) of the cut-outs 23, 24, whereas, as illustrated e.g. in Fig. 4 a different rotational position of the inner valve member 21 relative to the outer valve member 22 provides a larger overlapping area 24b (marked as black) of the cut-outs 23, 24.

Automatic, dynamic control of the flow amount is carried out on the flow opening, established by the pre-setting, by means of common axial movement of the valve members 21, 22. The valve members 21, 22 at their upper ends are connected to a circular, annular piston 29 that acts against a circular, rim-shaped seat 30 provided by an inner ledge 17 of the valve housing 2, and that moves axially with the valve members 21, 22 to close and open the opening area in a step-less manner to a larger or smaller extent within the pre-set range. The piston 29 is manufactured integrally with the valve member 22 and is shaped as a larger diameter circumferential protrusion from the valve member 22.

The dynamic control of the flow amount is illustrated by comparison of Fig. 2 and Fig. 3 or of Fig. 4 and Fig. 5. Thus in Figs. 2 and 4 the piston 29 is remote from the circular rim-shaped seat 30 leaving a maximum of the overlapping area 24a, 24b open. In Figs. 3 and 5 the piston 29 has together with the outer valve member 22 and the inner valve member 21 been moved axially towards the circular rim-shaped seat 30 and accordingly the part 19 of the valve housing adjacent the rim-shaped seat 30 covers a part of the overlapping area of the cut-outs 23, 24 leaving only a minor overlapping area 24c, 24d open for liquid to flow through.

When the outer valve member 22 and the inner valve member 21 are moved with the first shaft 7a axially downwards to minimize the overlapping area of the cut-outs 23, 24 the inner valve member 21 slides along the end of the second shaft 7b which consequently penetrates into a bore 38 in the lower end of the first shaft 7a.

The valve members 21, 22 and the piston 29 are axially fixedly attached to the lower end of the first shaft 7a. The upper end 10 of the first shaft 7a extends out of the valve 1 to be connectable with an automatically controlled actuator (not shown) for automatic control of the common axial position of the valve members 21, 22 and the piston 29. The upper bushing element 8 comprises an externally threaded portion 8a by means of which the actuator may be fixed to the valve 1. Thus the externally threaded portion 8a together with the upper end 10 of the first shaft provides a connector for connection with the actuator. Hereby, the dynamic amount control may be carried out automatically on the pre-set opening area.

Furthermore, the upper bushing element 8 comprises the differential pressure maintaining arrangement 13, i.e. a differential pressure regulator, for maintaining a constant differential pressure across the amount control arrangement 16 described above.

The differential pressure maintaining arrangement 13 comprises a cup-shaped, third valve member 32 movable in the axial direction in relation to the valve housing 2. A circumferentially extending lower edge or rim of the third valve member 32 cooperates with a circular, circumferentially extending valve seat 33 formed as part of the inner ledge 17 of the valve housing 2. Thus the circular, rim-shaped seat 30 and the circular, circumferentially extending valve seat 33 are positioned substantially in a common radial plane. The differential pressure maintaining arrangement 13 also comprises a rolling diaphragm 34 with an outer rim 35 and an inner rim 36. The outer rim 35 is attached between the upper bushing element 8 and a circumferential surface of the third valve housing 2 to thereby be stationary in relation to the valve housing 2. The inner rim 36 is attached between the third valve member 32 and a locking ring 32a to be axially movable together with the third valve member 32.

The rolling diaphragm 34 and the third valve member 32 are adapted to set themselves in a balance between an upstream pressure P1, which acts on an upper side of the rolling diaphragm 34 and the third valve member 32 and is equal to a pressure at an inlet to the amount control arrangement 16, and a spring force together with a downstream pressure P2, which acts on a lower side of the rolling diaphragm 34 and the valve member 32 and which is equal to a pressure at an outlet from the amount control arrangement 16. The upstream pressure P1 is the pressure at the valve inlet 3, which is equal to the pressure inside the hollow valve members 21, 22. The downstream pressure P2 is the pressure immediately after the flow adjusting orifice provided by the mutual overlap of the cut-outs 23, 24. The pressure after the valve outlet 4 of the valve 1 is denoted P3.

In this context, it should be noted that in each of the different locations or group of interior spaces in the valve system in which the pressures have been denoted P1, P2 and P3 in the above, the pressure can in reality be expected to vary to a certain degree. The above explanation of the relationship between the pressure inside the system is thus somewhat simplified compared to the actual conditions within the system. However, the overall functional descriptions are accurate.

The upstream pressure P1 is transferred from the inside of the valve members 21, 22 through the clearance between the upper end of the second shaft 7b and the opening in the inner valve member 21 to the bore 38 and through a capillary channel 39 in the first shaft 7a, which extends further through a clearance between the first shaft 7a and the upper bushing member 8 and into a volume defined above the third valve member 32 and the diaphragm 34. The downstream pressure P2 together with a spring force, provided by a helical spring 37, acts on the third valve member 32 in an upwards direction as seen in Fig. 1 against the upstream pressure P1 acting in a downwards direction on the third valve member 32 and the diaphragm 34. Hereby, a balance is established in a manner known to the skilled person between the upstream pressure P1 and the downstream pressure P2 plus the spring force. The differential pressure across the amount control arrangement 16 will therefore be substantially constant with a given spring force. The helical spring 37, that provides the above mentioned spring force, is located and acting between the valve housing 2 and the cup-shaped, third valve element 32. Thus, a lower end of the helical spring 37 is resting against an upper annular part 40a of a spacer comprising a lower annular part 40b seated in a groove between the circular, rim-shaped seat 30 and the circular, circumferentially extending valve seat 33; said upper annular part 40a which has a generally T-shaped cross section; and a number, e.g. three, of leg parts 40c extending between upper and lower annular parts 40a, 40b. It is noted that only one of the leg parts 40c is seen in Fig. 1.

For more details on and alternatives to the manufacture, structure and function of a valve insert providing a flow amount adjustment arrangement with dynamic flow amount regulation within a pre-set flow amount range and differential pressure regulation across the flow amount adjustment arrangement reference is made to WO 2009/135490 A1 and WO/2006/136158 mentioned in the introduction.

It should be noted that although the invention has above been explained by means of a specific example of an embodiment, the skilled person will realize that many variations are possible within the scope of the following claims.

## Claims

1. A valve comprising a valve housing (2) with an axis (5) defining an axial direction through the housing (2); a valve inlet (3); and a valve outlet (4),
the valve further comprising:
an amount control arrangement (16) for dynamic control of the amount of liquid flowing through the valve; and
a differential pressure maintaining arrangement (13) for maintaining a substantially constant differential pressure across the amount control arrangement (16),
wherein the amount control arrangement (16) is adapted for dynamic adjustment of the flow amount through the valve in a step-less manner between a maximum setting and a minimum of a flow amount range,
wherein the maximum setting of the flow amount range can be manually pre-set independently from the dynamic adjustment of the flow amount,
**characterized in that** the valve further comprises a connector (8a, 10) as a first access point, at a location on the valve housing (2), for connection with an actuator for automatic control of the dynamic adjustment of the flow amount, and
a manual access point (14), at a different location on the valve housing (2), for the manual pre-setting of the flow amount range.

2. A valve according to claim 1, wherein a valve insert (6) is extending through the valve housing (2) along the axis (5), said valve insert (6) comprising the first access point (8a, 10) and the manual access point (14), and the locations of the first access point and the different location of the manual access point are positioned on mutually opposite sides of the valve housing (2).

3. A valve according to claim 1 or 2, wherein the amount control arrangement comprises two valve members (21, 22) movable together with a first degree of freedom relative to the axis (5) for said dynamic adjustment and movable relative to each other with a second, different degree of freedom relative to the axis (5) for said manual pre-setting of the maximum setting of the flow amount range.

4. A valve according to claim 3, wherein the two valve members of the amount control arrangement comprise an inner, hollow, substantially circular cylindrical valve member (21) co-axial with an outer, hollow, substantially circular cylindrical valve member (22).

5. A valve according to claim 3 or 4, wherein one valve member of the two valve members (21, 22) is connected, rigidly relative to said first degree of freedom, with a first shaft (7a) extending to the location of the first access point (8a, 10), and another valve member of the two valve members (21, 22) is connected, rigidly relative to said second degree of freedom, with a second shaft (7b) extending to the location of the manual access point (14).

6. A valve according to claim 4, wherein one valve member of the two valve members (21, 22) is connected, rigidly relative to said first degree of freedom, with a first shaft (7a) extending to the location of the first access point (8a, 10), and another valve member of the two valve members (21, 22) is connected, rigidly relative to said second degree of freedom, with a second shaft (7b) extending to the location of the manual access point (14), the first shaft (7a) being connected to one of the two valve members (21, 22) for moving axially at least said one of the two valve members (21, 22), the second shaft (7b) being connected to the other of the two valve members (21, 22) for rotating said other of the two valve members by rotation of the second shaft (7b), the second shaft (7b) being axially moveable relative to said one of the two valve members (21, 22).

7. A valve according to claim 6, wherein the two valve members (21, 22) are axially movable in unison by means of the first shaft (7a), and the second shaft (7b) is axially movable relative to the other of the two valve members also (21, 22).

8. A valve according to claim 6 or 7, wherein the first shaft (7a) is connected to the outer, hollow, substantially circular cylindrical valve member (22) for moving axially at least said outer valve member (22), and the second shaft (7b) is connected to the inner, hollow, substantially circular cylindrical valve member (21) for rotating said inner valve member (21).

9. A valve according to any one of claims 4 to 8, wherein both of the valve members (21, 22) has a circumferentially extending cut-out (23, 24), the pre-setting of the maximum setting of the flow amount range being established by manual rotation of one valve member (21) in relation to the other valve member (22) to provide a varying overlap of the cut-outs (23, 24) and thus a varying pre-set opening area, a piston (29) acting against a seat (30) being movable together with the valve members (21, 22) in the axial direction to vary the pre-set opening area provided by the circumferential overlap of the cut-outs (23, 24), and thus to provide the variable control of the amount of liquid flowing through the valve, the piston (29) being connectable with the actuator for automatic control of the axial position of the piston (29).

10. A valve according to any one of claims 1 to 9, wherein the differential pressure maintaining arrangement (13) comprises a third valve member (32), the third valve member (32) being movable in the axial direction of the valve in relation to a second seat (33) in the valve housing (2) and being adapted to set itself in a balance between an upstream pressure (P1) on an upper side equal to a pressure at an inlet to the amount control arrangement (16) and a downstream pressure (P2) on a lower side equal to a pressure at an outlet from the amount control arrangement as well as a spring force (37).

11. A valve according to claim 10, further comprising a rolling diaphragm (34) with an outer and an inner rim (35, 36), the inner rim (36) being attached to the third valve member (32), and the outer rim (35) being attached so as to be stationary in relation to the valve housing (2).

12. A valve according to claim 10 or 11, wherein the third valve member (32) is cup-shaped, a circumferential lower edge of the third valve member (32) cooperating with the second valve seat (33).

13. A valve according to claim 9 and 12, wherein the first valve seat (30) and the second valve seat (33) are positioned co-axially in the valve housing (2) substantially in a common, radial plane.
